# EUROPEAN PATENT APPLICATION

(11) **EP 1 164 094 A1**
(43) Date of publication of application: **19.12.2001**
(21) Application number: 01113716.3
(22) Date of filing: 05.06.2001
(51) Int. Cl.: B65G 15/48, B65G 15/38

(54) **Conveyor belt**

(30) Priority: 14.06.2000 SE 0002223
(71) Applicant: Nordifa AB, 301 16 Halmstad (SE)
(72) Inventor: Spanggard, Göran, 310 41 Gullbrandstorp (SE)
(74) Representative: Franzén, Lars Hjalmar

(57) **Abstract**

A conveyor belt (1) and a method of manufacturing a conveyor belt comprising an elongate, longitudinally and transversely stable carrier (2) made from a metal belt, preferably of steel belt type. The conveyor belt (1) essentially has a first and a second face. At least on its first face said carrier (2) carries a layer (3) of a heat-resistant and thermally insulating material.

## Description

### Technical Field

The present invention relates to a conveyor belt comprising an elongate, longitudinally and transversely stable carrier of steel belt type, and a method of manufacturing conveyor belts.

### Technical Background

A conveyor of the kind defined in the introduction is previously known, for instance for transportation of freshly extruded metal profile sections. Such metal profile sections have a temperature of 400-500°C upon leaving the extruder. One consequence is that the support on which the metal profile sections are carried are exposed to extremely high temperatures.

The profile section is in its most sensitive stage immediately upon leaving the extruder, and therefore the subsequent transportation thereof has a decisive importance on the quality of the product. This type of transportation of heated articles is used in many other fields within industry, such as in the manufacture of fluorescent tubes and glass and the extrusion of metal profile sections, such as aluminium profile sections.

Very often, the profile sections are cut to predetermined standard lengths and in conjunction with the cutting operation amounts of chips are loosened and readily adhere to the belt along the path of travel. Chips thus singed to the belt tend to cause scratches on the sensitive surface structure.

Another problem is that in the cooling phase that follows upon the extrusion the profile section shrinks and in doing so also contracts the protective plastic material, causing the latter in time to be pulled from the belt. The degradation time as also the serviceable life of existing conveyor belts manufactured according to prior-art technology thus is very short since the belts are affected by the high temperatures of the products transported on these belts. A more general problem is that the heat from the profile section or the article also causes release from the belt of various substances and gases, which in turn has a detrimental effect on the appearance of the profile section or of the article, in addition to making subsequent treatments more difficult. One example is the discoloration caused to articles made from glass. Aluminium profile sections that have been exposed to the process described above cannot later be anodised to the desired result.

A further problem inherent in prior-art technology is that in the case of standstills, there is a considerable risk that the articles or profile sections cause the belts to melt down completely.

Thus, a solution is still needed to the problem of providing a longitudinally and transversely stable conveyor which is intended for heated articles and profile sections and which in addition is to have a long degradation time and not emit obnoxious substances or gases when exposed to heat while at the same time profile sections and articles must not be exposed to mechanical external damage from chips or torn-away pieces of the conveyor.

### Summary of the Invention

The object of the present invention therefore is to provide in a cost-efficient manner a stable conveyor belt, which offers an improved solution compared with prior-art technology to the above problems experienced because of short degradation times and the effects from mechanical means and chemicals. This object is achieved in accordance with the teachings of the invention by giving a conveyor of the kind defined in the introduction the characteristic features appearing from the appended claim 1. Preferred embodiments of the conveyor appear from the dependent claims.

The invention thus concerns a conveyor belt comprising an elongate, longitudinally and transversely stable carrier made from a metal belt, preferably of steel belt type, said conveyor belt essentially comprising a first and a second face. The conveyor belt is characterised in that on at least its first face the carrier supports a layer of a heat-resistant and thermally insulating material.

By using carriers made from a metal belt intended for heated articles, a conveyor belt is produced, which is longitudinally as well as transversely stable when in its mounted position. Thanks to the longitudinal stability imparted by the metal belt, metal profile sections and other heavy goods may be transported on the belt without the advancement thereof being impaired owing to heat-induced ageing or load-induced stretching of the belt. A belt stretched because of load thereon will not abut snugly against for instance turning rolls, with consequential uneven advancement or complete standstill of the belt.

If several conveyor belts jointly carry an elongate article of some kind crosswise relative to their direction of advancement, it is of particular importance that the advancement is effected at a controlled and even advancement rate.

The latter case also gives exemplifies the advantage of a belt that is transversely stable. During the further transportation of heated metal profile sections, the latter shrink while cooling, with the result that the belts, and particularly those in an outermost position, in contact with the profile sections, are exposed to tensile forces in the direction transverse to the direction of advancement. In the mounted and tensioned position of the belt, the metal belt thus becomes dimensionally stable as well as stable under load in its longitudinal as well as transverse extension. The metal belt thus serving as a carrier preferably is of steel belt type. Preferably, it has a smooth configuration but for some applications it could be designed or configured for adaptation to the products to be transported thereon.

Because one face of the belt is covered by a thermally insulating material the belt is imparted improved anti-degradation properties, which increases the capacity of the belt to withstand heat supplied thereto as also its useful life, without loss of stability in the conveyor belt. This combination thus provides extremely advantageous conditions for conveyance of heated objects for example in the manufacture of articles of metal and glass.

In applications of this kind, the transported articles are exposed to very high temperatures in a stage when they are extremely sensitive to environmental influence. Owing to their intrinsic heat, these articles tend to affect their environment and thus they have several disadvantageous effects on themselves. The thus generated effects on the environment could in turn bring about secondary effects of a negative nature on the sensitive articles. The thermally insulated material likewise presents a solution to the problem of scorching or singing of the conveyor belt in the event of standstills or the like.

Heat-resistant and thermally insulated fibre materials suitable for use together with the conveyor belt are chosen primarily from the group comprising p-aramides, m-aramides, poly-phenylene sulphide (PPS), polyimide (PI), poly-tetrafluorethylene fibres (PTFE), carbon fibres and ceramic fibres. It should be understood that some or several of the above fibre materials could be combined in various ways to produce a layer suitable for use on the conveyor belt. Combinations of fibres of different kinds thus make it possible to obtain a variety of felt materials that are useful for said layer.

In accordance with one embodiment of the invention, the heat-resistant and thermally insulating material of the layer on the conveyor belt consists of a polyamide. In this case, the polyamide forms a fibre felt, which may be applied to the steel belt. One example of a useful polyamide is the aramide fibre known as Nomex®. In accordance with another preferred embodiment of the invention the layer is an aramide fibre of paratype, preferably Kevlar®, which is a polyamide.

The Kevlar® polyamide is highly suitable as a first layer for use on the steel band. Without noticeable degradation, it withstands temperatures of up to more than 400°C to which it may be exposed from the transported articles. It is precisely to the problems connected with articles and profile sections having temperatures in this range that the prior art has failed to find any solutions. Nomex® is an alternative material for conveyor belts exposed to slightly lower temperatures.

The advantages of using Nomex® and Kevlar® are that these materials form a protective layer between the articles and the carrier, a layer that is heat resistant and has a thermally insulating effect, and because of these qualities they contribute to the reduced effect on the carrier from extremely high temperatures. Heat causes the metal of the carrier to expand, which may result in slack in the belt. A further advantage offered by these materials is that they form a functional and comparatively smooth surface for supporting the transported articles and this surface is soft and kind to the sensitive materials of the articles during transportation.

In accordance with another embodiment of the invention, the heat-resistant and thermally insulating first layer on the conveyor belt consists of carbon fibres. Carbon fibres are less elastic than the polyamides mentioned above but on the other hand, their heat-resistant is superior. They are able to withstand temperatures of up to 800°C, frequently occurring in the production of e.g. products of glass, without exhibiting noticeable degradation of the layer, when the latter is made from carbon fibres.

In accordance with one embodiment of the invention, the conveyor belt is provided on the second face of the carrier with a layer of polyamide. The layer is applied on the carrier of the belt in such a manner that it forms an external layer of uniform thickness. This second layer also offers a possibility of compensating for unevenness along the belt surface, for example in areas where the belt is riveted together or where joints occur. The even thickness of the second layer ensures a smooth belt run around the rolls or turning rolls. This layer too, is preferably formed from a heat-resistant and thermally insulating material to prolong the degradation time of the belt. However, the inventive idea is not limited to a particular choice of material in the layer but this choice suitable is made in consideration of the advancement of the belt as well as of e.g. serviceable life and heat resistance. Thus, the layer could also consist of plastics or some other synthetic material, such as polyester fibres.

According to one embodiment of the conveyor belt, the latter comprises tooth belts for controlled belt advancement. In this case the tooth belts either form part of the layer of the second belt face or else the entire face is covered by a layer of a tooth belt.

The layers of the conveyor belt preferably are applied with the aid of double-sided adhesive tape. An alternative solution is to apply the layers by means of glue. In addition, the belt must be sufficiently stable to support the weight from the articles it carries. Kevlar® as well as Nomex® are registered DuPont trademarks. It is easily understood that the above characteristics could be combined optionally in a variety of ways to provide further aspects and embodiments of the invention.

### Brief Description of the Drawings

The invention will be described in the following by means of one embodiment and with reference to the accompanying drawings, wherein

Fig 1 is a schematic representation showing the principle of application of the inventive object for handling continuously cast aluminium profile sections.

Fig 2 is a lateral view of one embodiment of the inventive object in the direction of arrow A of Fig 1.

Fig 3 is an enlarged part view of the area B of Fig 1.

Fig 4 is a plan view of a section of the inventive object.

Fig 5 is a lateral view of an alternative embodiment of the inventive object.

### Detailed Description of Preferred Embodiments

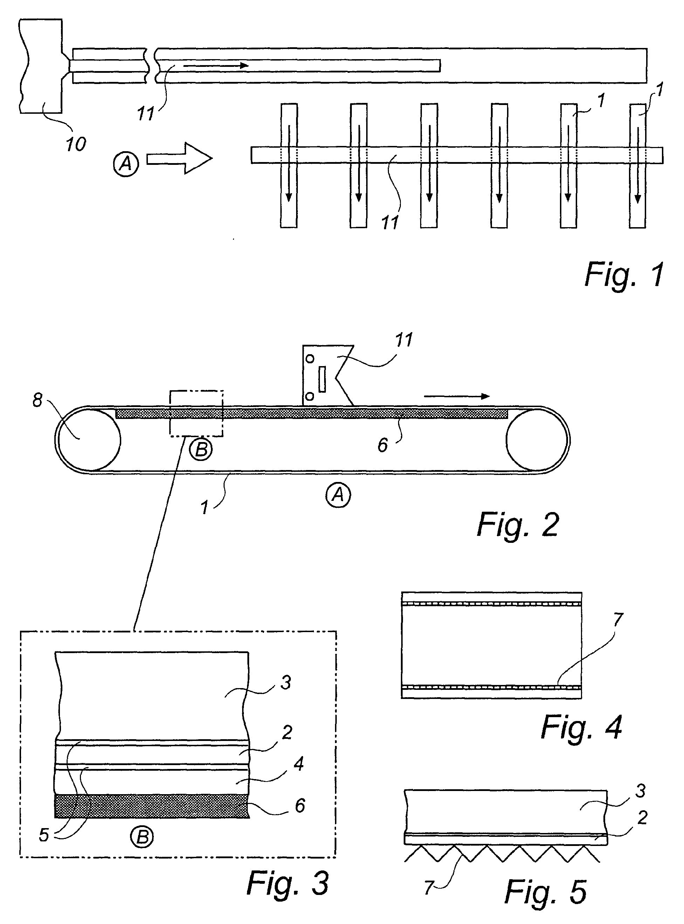

Fig 1 is a schematic view showing the principle of application of the conveyor belt 1 in accordance with one embodiment of the invention. In this case, the invention is implemented for the production of aluminium profile sections 11 in an extruder 10. When the profile sections are pressed onto a conveyor belt 12 or similar transportation device they have a temperature of more than 500°C. The profile sections are thereafter cut to suitable lengths and are then turned to be subsequently advanced crosswise to their axial extension. The advancement of the profile sections up to the point of subsequent treatments, such as anodising, is effected with the profile sections supported on a plurality of conveyor belts 1 running in parallel. In other applications, the profile sections could equally well be supported by a conveyor belt while orientated in their axial extension.

Fig 2 is a lateral view of a conveyor belt 1 when mounted. The conveyor belt 1 supports a profile section 11. The conveyor belt 1 travels in a loop about a number of turning rolls 8 and on support beams 6, belt ends being joined together by means of a riveted joint, a weld or the like. Intermediate the turning rolls 8, support beams 6 are arranged to support the belt 1. Alternatively, the advancement of the belt is effected by configuring the support beams 6 as so called walking beams.

Fig 3 shows the layers of the conveyor belt in a cross-sectional view. The carrier 2 is formed from a metal belt of steel on which is applied a layer 3 of a thermally insulating material of a polyamide fibre, preferably of Kevlar® type. The conveyor belt 1 is manufactured to widths of 60, 80, 100 and 120 mm, but obviously it is possible to manufacture the belt to other dimensions.

The opposite, second face of the carrier is formed with a second layer 4 preferably made from a thermally insulating and heat-resistant material. In accordance with one embodiment of the invention, the second layer 4 consists of a polyester fibre or other kind. The primary function of this layer is to ensure even abutment of the belt against drive means and turning rolls, and to provide the necessary grip between the belt and the drive means to ensure belt advancement in the desired manner.

It is suitable to join the layers 3, 4 to the carrier by means of a binder 5. Preferably, a heat-resistant double-sided adhesive tape is used, such as GARCO TF7931 as the binder 5. Approximately 100 grams of an adhesive means is needed for each square meter of belt. A two-component adhesive is an alternative to the tape to serve as the binder 5.

In accordance with one preferred embodiment of the invention, the conveyor belt 1 is about 100 mm wide. The carrier 2 consists of a steel belt having a thickness of 0.3 mm, said steel belt carrying a first layer 3 of e.g. Kevlar® having a layer thickness of 8 mm. On the opposite side 2 of the carrier is applied, in accordance with this preferred embodiment, a layer 4 of e.g. Nomex® having a layer thickness of 1.2 mm.

Fig 4 is a plan view of an alternative embodiment of the invention, according to which at least one layer of the conveyor belt is equipped with tooth belts 7 to drive the belt by tooth engagement with a toothed drive means of some kind.

Fig 5 is a lateral view of a variety of the invention, according to which the second layer is configured as a tooth belt, the teeth of which extend essentially perpendicularly to the direction of extension of the belt and across the entire width of the belt.

The invention is not limited to the above embodiment, which are to be regarded merely as examples of the invention and therefore it may be varied as to its details within the scope of the inventive idea.

## Claims

1. A conveyor belt (1) comprising an elongate, longitudinally and transversely stable carrier (2) made from a metal belt, preferably of steel belt type, said conveyor belt (1) essentially having a first and a second face, **characterised in that** at least on its first face said carrier (2) carries a layer (3) of a heat-resistant and thermally insulating material.

2. A conveyor belt as claimed in claim 1, wherein said heat-resistant and thermally insulating material in the layer (3) on the first face consists of a polyamide fibre.

3. A conveyor belt as claimed in claim 2, wherein said heat-resistant and thermally insulating material in the layer (3) on the first face consists of a paratype of aramide fibre.

4. A conveyor belt as claimed in claim 1, wherein said heat-resistant and thermally insulating material in the layer (3) on the first face consists of carbon fibres.

5. A conveyor belt as claimed in any one of claims 1-4, wherein the heat-resistant and thermally insulating material in the layer (3) on the first face is coated with an additional layer of a material having higher heat-resistance than said first layer.

6. A conveyor belt as claimed in any one of the preceding claims, wherein the second face of the carrier supports a layer (4) corresponding to the layer on the first face.

7. A conveyor belt as claimed in claims 1-5, wherein the second face of the carrier supports a layer (4) of a polyamide.

8. A conveyor belt as claimed in any one of claims 1-5, wherein the second face of the carrier supports a layer (4) of polyester fibres.

9. A conveyor belt as claimed in any one of the preceding claims, said conveyor belt comprising tooth belts (7) for controlled advancement.

10. A conveyor belt as claimed in any one of the preceding claims, wherein the layers of the conveyor belt are applied by means of double-sided adhesive tape.

11. A method of manufacturing a conveyor belt (1) comprising an elongate, longitudinally and transversely stable carrier (2) made from a metal belt, preferably of steel belt type, said conveyor belt (1) essentially having a first and a second face, **characterised by** the steps of applying double-sided adhesive tape on the first face said carrier (2) and of thereafter applying a layer (3) of a heat-resistant and thermally insulating material on the opposite face of the tape to cover the face of the metal belt.

12. A method as claimed in claim 11, wherein the heat-resistant and thermally insulating material in layer (3) on the first face consists of a polyamide fibre.

13. A method as claimed in claim 11, wherein said heat-resistant and thermally insulating material in the layer (3) on the first face consists of a paratype of aramide fibre.

14. A method as claimed in claim 11, wherein said heat-resistant and thermally insulating material in the layer (3) on the first face consists of carbon fibres.

15. A method as claimed in any one of claims 11-14, wherein said heat-resistant and thermally insulating material in layer (3) on the first face is coated with an additional layer of a material having higher heat resistance that the first layer.

16. A method as claimed in any one of claims 11-15, wherein double-sided adhesive tape is applied also on the second face of the metal belt, whereupon a layer (4) of a heat-resistant and thermally insulating material is applied on the second face of the tape to cover also the second face of the metal belt.

17. A method as claimed in any one of claims 11-16, wherein a layer (4) corresponding to the layer on the first face is applied on the second face of the carrier.

18. A method as claimed in any one of claims 11-16, wherein a layer (4) of a polyamide is applied on the second face of the carrier.

19. A method as claimed in any one of claims 11-16, wherein the second face of the carrier supports a layer (4) of polyester fibres.
